# EUROPEAN PATENT SPECIFICATION

(11) **EP 1 757 153 B1**
(45) Date of publication and mention of the grant of the patent: **09.04.2008**
(21) Application number: 05756653.1
(22) Date of filing: 13.06.2005
(51) Int. Cl.: H04Q 7/38

(54) **A METHOD OF SCHEDULING A MOBILE TERMINAL IN SOFT HANDOVER**
VERFAHREN ZUR TERMINIERUNG EINES MOBILEN ENDGERÄTS BEI SOFT-HANDOVER
PROCEDE DE PROGRAMMATION D'UN TERMINAL MOBILE DANS UN TRANSFERT INTERCELLULAIRE SANS COUPURE

(30) Priority: 17.06.2004 GB 0413585; 05.11.2004 GB 0425352
(43) Date of publication of application: 28.02.2007
(73) Proprietor: Nokia Siemens Networks GmbH & Co. KG, 81541 München (DE)
(72) Inventor: CHAPMAN, Thomas, Malcolm, Southampton Hampshire SO18 4RY (GB); UNTEREGGER, Burghard, A-1040 Wien (AT); RANDALL, David, Hampshire SO51 5SZ (GB)
(74) Representative: Payne, Janice Julia
(86) International application number: PCT/GB2005/002336
(87) International publication number: WO 2005/125253

(56) References cited:
- WO-A-20/04014097
- WO-A-20/04042954
- WO-A-20/05018496
- "Feasibility study for enhanced uplink for UTRA FDD (Release 6) 3GPP TR 25.896" 3GPP TR 25.896 V6.0.0, March 2004 (2004-03), page complete, XP002322111

## Description

This invention relates to a method of scheduling a mobile terminal in soft handover, in particular for 3^{rd} generation mobile phone systems.

The 3^{rd} generation project partnership (3GPP) universal mobile telecommunications system (UMTS) cellular radio system includes a capability known as Enhanced Uplink Dedicated Channel (E-DCH, also known as HSUPA). This capability enables a mobile terminal or user equipment (UE) to transmit data, potentially at high rates, to base stations or Node B(s) under Node B scheduling control. The rate at which the UE can transmit using E-DCH is controlled by one or more Node Bs based on information describing the amount of data stored by the UE, or the data rate that the UE indicates that it requires. The Node B(s) indicate to the UEs the highest data rates, or alternatively transmit power levels, that the UEs are permitted to use for a given period of time.

In 3GPP UMTS, a UE can operate in a state that is known as soft handover. In this case it communicates through more than one Node B, using dedicated channels, i.e. physical channels that are exclusively assigned to the UE. Where the UE is operating in soft handover and the UE is also using E-DCH, the E-DCH can be received by some or all of the Node Bs, with the resultant data streams being combined in the radio network controller (RNC). This gives a lower data error rate for the aggregate data stream effectively enabling higher data rates to be used on E-DCH for a given UE transmit power, than would otherwise be the case when not in SHO. Some or all node B's in the active set may send scheduling commands to the UE. These commands can consist of resource limits or "up/down" indicators. In general the UE is obliged to obey the node B offering the lowest instantaneous data rate, or indicating "down". However, it is inefficient for every node B to schedule the UE and in some cases such scheduling has a high power requirement, as well as possible errors arising between the UE and some node Bs if there is high path loss between them.

A prior art document describing a method of scheduling transmissions from a mobile terminal in soft handover is document WO-A-2004014097.

In accordance with the present invention, a method of scheduling enhanced dedicated channel transmissions from a mobile terminal in soft handover comprises determining a sub-set of base stations within an active set which comply with specified criteria; and causing base stations outside the sub-set to cease sending scheduling information in downlink to the mobile terminal.

The invention provides a method for the selection of a group of scheduling base stations from all those in the active set, which allows more error prone pairs to be discarded, so saving power requirement at those basestations and improving the chances of successful signalling between the mobile terminal and those basestations which are selected.

Preferably, the content of the sub-set is updated in response to a change in radio conditions, giving rise to a change in rank of a particular base station.

Preferably, the specified criteria comprise one of being below a downlink path loss limit, or being one of a given number of base stations in the active set having the lowest path loss.

Preferably, when the sub-set comprises a single base station, the method further comprises optimising the mobile terminal scheduling algorithms in the base station accordingly.

Measurements made by the mobile terminal may be used to determine which base stations are within the subset that is responsible for sending the scheduling information to the terminal, and the mobile terminal indicates to each basestation, either that it has been selected for the sub-set or indicates to a non-selected basestation that it should not send scheduling information.

Alternatively, determination of the sub-set of base stations is carried out in the UMTS terrestrial radio access network based on measurements reported by the mobile terminal.

A network element or elements, such as a radio network controller (RNC) or Node Bs, identify which node Bs should include the UE in their sets of UEs that should be considered for resource allocation.

The present invention is flexible in that either the mobile terminal or the RNC can make the decision on which base station, or base stations to choose. It is assumed that for enhanced uplink, the mobile terminal will indicate the preferred node Bs for scheduling.

Preferably, signalling of the occupants of the sub-set is by means of Node B identifiers added to a MAC header of each E-DCH transport block.

Preferably, signalling of the measurements to be used in evaluating whether to schedule the mobile terminal are added to a MAC header of each E-DCH transport block sent to the node B.

Alternatively, signalling of the measurements to be used in evaluating whether to schedule the mobile terminal are sent via radio resource control (RRC) signalling to the UTRAN network.

An example of a method of scheduling a mobile terminal in soft handover according to the present invention will now be described with reference to the accompanying drawings in which:
Figure 1 is a block diagram illustrating one embodiment of the method of the present invention; and,
Figures 2a and 2b illustrate how node B's are notified of their inclusion in a subset of the active set using the method of the present invention.

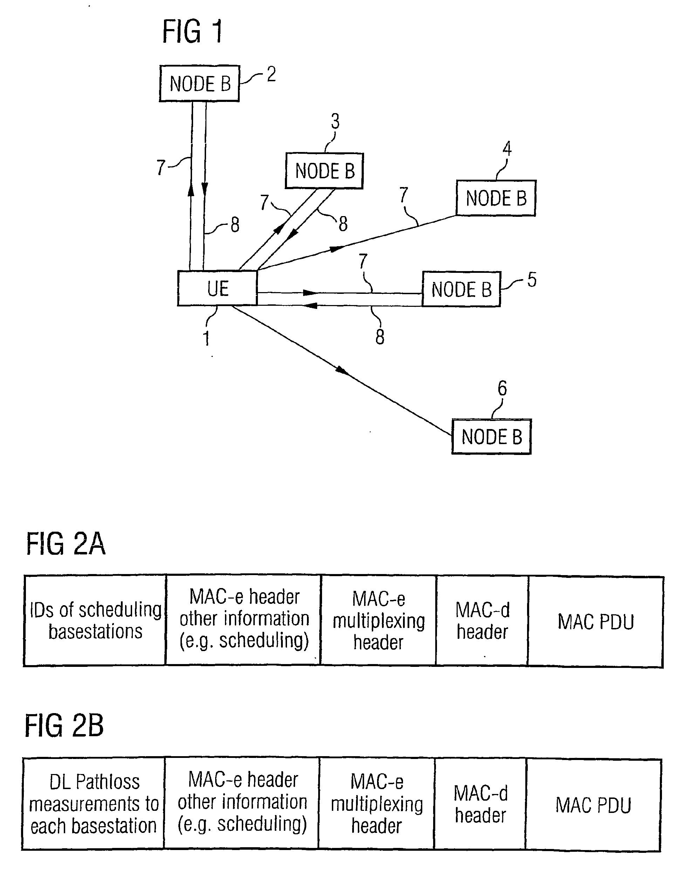

Fig.1 illustrates a first example of the present invention. A mobile terminal 1 is engaged in soft handover (SHO). An active set of base stations 2, 3, 4, 5, 6 involved in the soft handover are shown around the mobile terminal. Rather than accept scheduling commands from all of the base stations in the active set, the present invention allows the mobile terminal 1 to indicate one or more preferred base stations for scheduling. In UMTS the mobile terminal is a UE and the base stations are node Bs and this terminology will be used to describe this embodiment.

Whilst it is possible for the UE to receive scheduling commands from all of the Node B's in its active set and the UE can be required, for example, to obey the scheduler offering the lowest instantaneous data rate, there is an advantage if only a subset of Node B's in the active set schedule the UE. The enhanced dedicated channel in UMTS lets the UE indicate its preferred Node B(s) for scheduling and so, the UE has to decide which of the Node Bs in the active set are to schedule its E-DCH transmissions. If the UE 1 has a high path loss to certain Node Bs 4, 6, then scheduling information may not be received, or the information may be received in error. In any case signalling requires a large amount of node B power, which is wasteful if another node B can signal more effectively with less power. During soft handover, it is desirable that the UE is scheduled by the node B with the lowest path loss. This node B also requires the lowest power. If two or more node Bs have similar power requirements, e.g. within 3dB, then the UE can be scheduled by all of them and respond to the smaller allocation.

Furthermore, there is an increased likelihood of a large uplink pathloss, in which case the E-DCH contributes less to the overall performance and gives rise to less noise rise than for the stronger links to the other node Bs 2, 3, 5. In these circumstances it may be better if the UE is not scheduled by the Node Bs 4, 6 with the weakest links. Having selected a desired subset of Node Bs, the UE continues to send uplink transmissions 7 to all of the Node Bs, but only the selected Node B's 2, 3, 5 allocate downlink capacity 8. The Node Bs 4, 6 which have been excluded from the scheduling subset by the UE 1 do not assign downlink capacity to the UE, and that capacity can be used for other UEs with which the node B communicate, where the pathloss is not so significant.

The UE's transmissions then represent a noise cost rather than a scheduled capacity cost and thus the overall system capacity can increase. As described above, the node Bs 4, 6 that do not participate in scheduling remain part of the active set and hence receive E-DCH transmissions on the uplink channel 7 from the UE and participate in the SHO connection. If, as a result of selection process, only one Node B schedules the UE, the scheduling algorithms in the NodeB can be optimized based on the Node B knowing that a UE will definitely follow its scheduling commands, rather than making an allocation of capacity without knowing if the capacity will be used, which tends to be more conservative.

In the present invention the UE 1 identifies which are its preferred scheduling Node B(s) 2, 3, 5 based on pathloss measurements made by the UE. The pathloss measurements that are made by the UE can be based on the common pilot indication channel (CPICH) received signal code power (RSCP) measurement that is already defined in UMTS. This preference is then signalled to all Node Bs that are in the soft handover group via the uplink 7. The subset of scheduling Node Bs can be selected, for example, on the basis of having downlink path losses that fall within thresholds signalled to it by the network. Alternatively, they can be selected as the 'n' cells that have the lowest path loss or they can be selected on a basis of a combination of these two methods.

The preferred subset of Node B's can be signalled frequently to all the Node Bs in the active set, allowing adaptation to changing radio conditions. One method of signalling the preferred Node Bs is to include their identifiers in the media access control (MAC) header that is included in each E-DCH transport block, i.e. the block of data that is transmitted in one E-DCH TTI, where transmission time interval (TTI) denotes the forward error correction (FEC) coding interleaving period. This is illustrated in Fig. 2. Fig. 2a illustrates MAC protocol data units (PDU) showing PDU, MAC-d header and MAC-e header including multiplexing, scheduling information and indication of scheduling node B. Fig. 2b shows MAC PDU showing PDU, MAC-d header and MAC-e header including multiplexing, scheduling information and an indication of downlink (DL) pathloss from each B. An alternative is to use physical layer signalling, although this is more costly for the UE in terms of transmit power and more costly for the network in terms of interference resource.

One alternative to the TOE signalling to the node B that is to do the scheduling is that the measurements reported by the mobile terminal are sent directly to each base station, which then decides whether to schedule the mobile terminal, based on a threshold value. For example, the RSCP measurement is reported by the UE directly to the node B, and the node B then determines whether it should schedule E-DCH transmissions to the UE. The Node B can decide whether it should schedule for the UE for a period of time, based upon whether the measurements indicate that the path loss exceeds a threshold value.

Another alternative embodiment of the method of the present invention is to let the UMTS radio access network (UTRAN) select the preferred scheduling cells based on measurements of CPICH RSCP provided by the UE, rather than letting the UE or Node B make the decision directly. A UE can, by existing standards description, be commanded to send CPICH RSCP measurement reports to the UTRAN which enable a choice of preferred scheduling Node Bs to be made within the UTRAN network. However, these measurements are made to the serving RNC (SRNC), which terminates the UEs core network, Iu, connection, rather than being made to the one or more controlling RNCs (CRNC) that control the Node Bs. The SRNC signals the preferred Node Bs to the CRNCs which indicates this to the Node Bs. This option is not able to respond as quickly to radio path changes as when the UE identifies which are its preferred scheduling Node Bs, based on measurements made by the UE.

In the situation where the UE does not specifically identify its preferred node Bs, the node Bs detect signals from the UE which indicated whether that node B is one of the best node Bs to schedule the UE based on a rank order, rather than whether a particular node B should, as part of a continuous scheduling process, schedule a particular UE in each particular time instance due to traffic or radio conditions.

## Claims

1. A method of scheduling enhanced dedicated channel (E-DCH) transmissions from a mobile terminal in soft handover; the method comprising determining a sub-set of base stations within an active set which comply with specified criteria; and causing base stations outside the sub-set to cease sending scheduling information in downlink to the mobile terminal; wherein measurements made by the mobile terminal are used to determine which base stations are within the sub-set that is responsible for sending scheduling information to the terminal, **characterised in that** the method further comprises a step wherein the mobile terminal indicates, by signalling to each base station, either that it has been selected for the sub-set or indicates to a non-selected base station that it should not send scheduling information.

2. A method according to claim 1, wherein the content of the sub-set is updated in response to a change in radio conditions, giving rise to a change in rank of a particular base station.

3. A method according to claim 1 or claim 2, wherein the specified criteria comprise one of being below a downlink path loss limit, or being one of a given number of base stations in the active set having the lowest path loss.

4. A method according to any preceding claim, wherein when the sub- set comprises a single base station, the method further comprises optimising the mobile terminal scheduling algorithms in the base station accordingly.

5. A method according to any preceding claim, wherein signalling of the occupants of the sub-set is by means of Node B identifiers added to a media access control (MAC) header of each E-DCH transport block.

6. A method according to any preceding claim, wherein signalling of the measurements to be used in evaluating whether to schedule the mobile terminal are added to a MAC header of each E-DCH transport block sent to the node B.

7. A method according to any of claims 1 to 5, wherein signalling of the measurements to be used in evaluating whether to schedule the mobile terminal are sent via radio resource control (RRC) signalling to the UTRAN network.

## Patentansprüche

1. Verfahren zum Terminieren von E-DCH-Übertragungen (enhanced dedicated channel - erweiterter festgeschalteter Kanal) von einem mobilen Endgerät bei Soft-Handover, mit Bestimmen einer Teilmenge von Basisstationen innerhalb einer aktiven Menge, die angegebenen Kriterien entsprechen; und Veranlassen, daß Basisstationen außerhalb der Teilmenge das Senden von Terminierungsinformationen auf der Abwärtsstrecke zum mobilen Endgerät beenden; wobei durch das mobile Endgerät getätigte Messungen zum Bestimmen benutzt werden, welche Basisstationen sich innerhalb der Teilmenge befinden, die für das Senden von Terminierungsinformationen zum Endgerät verantwortlich ist, **dadurch gekennzeichnet, daß** das Verfahren weiterhin einen Schritt umfaßt, wobei das mobile Endgerät durch Signalisieren zu jeder Basisstation anzeigt, entweder, daß sie für die Teilmenge ausgewählt worden ist oder einer nicht ausgewählten Basisstation anzeigt, daß sie keine Terminierungsinformationen senden sollte.

2. Verfahren nach Anspruch 1, wobei der Inhalt der Teilmenge als Reaktion auf eine Änderung der Funkbedingungen aktualisiert wird, wodurch eine Änderung des Rangs einer bestimmten Basisstation entsteht.

3. Verfahren nach Anspruch 1 oder Anspruch 2, wobei die angegebenen Kriterien eines von sich unter einer Abwärts-Übertragungsverlustgrenze befindend oder eine einer gegebenen Anzahl von Basisstationen in der aktiven Menge mit der geringsten Übertragungsdämpfung seiend umfassen.

4. Verfahren nach einem beliebigen vorhergehenden Anspruch, wobei, wenn die Teilmenge eine einzelne Basisstation umfaßt, das Verfahren weiterhin das entsprechende Optimieren der Terminierungsalgorithmen des mobilen Endgeräts in der Basisstation umfaßt.

5. Verfahren nach einem beliebigen vorhergehenden Anspruch, wobei Signalisieren der Nutzer der Teilmenge mittels einem MAC-Kopfteil (media access control - Medienzugangssteuerung) jedes E-DCH-Transportblocks hinzugefügter Kennungen des Knotens B stattfindet.

6. Verfahren nach einem beliebigen vorhergehenden Anspruch, wobei Signalisieren der Messungen, die bei der Auswertung zu benutzen sind, ob das mobile Endgerät zu terminieren ist, einem MAC-Kopfteil jedes zum Knoten B gesendeten E-DCH-Transportblocks hinzugefügt wird.

7. Verfahren nach einem der Ansprüche 1 bis 5, wobei Signalisieren der Messungen, die bei der Auswertung zu benutzen sind, ob das mobile Endgerät zu terminieren ist, über RRC-Signalisieren (radio resource control - Funkressourcensteuerung) zum UTRAN-Netz gesendet wird.

## Revendications

1. Procédé de programmation de transmissions sur un canal dédié amélioré (E-DCH) en provenance d'un terminal mobile en transfert intercellulaire sans coupure ; le procédé comprenant de déterminer un sous-ensemble de stations de base au sein d'un ensemble actif qui est conforme à des critères spécifiés ; et de faire en sorte que les stations de base à l'extérieur du sous-ensemble cessent d'envoyer des informations de programmation en liaison descendante vers le terminal mobile ; dans lequel les mesures effectuées par le terminal mobile sont utilisées pour déterminer quelles stations de base sont dans le sous-ensemble qui est responsable de l'envoi des informations de programmation au terminal, **caractérisé en ce que** le procédé comprend en outre une étape dans laquelle le terminal mobile indique, par signalisation à chaque station de base, soit qu'elle a été sélectionnée pour le sous-ensemble, soit indique à une station de base non sélectionnée qu'elle ne doit pas envoyer d'informations de programmation.

2. Procédé selon la revendication 1, dans lequel le contenu du sous-ensemble est mis à jour en réponse à un changement des conditions radio, donnant lieu à un changement de rang d'une station de base particulière.

3. Procédé selon la revendication 1 ou la revendication 2, dans lequel les critères spécifiés comprennent d'être en dessous d'une limite d'affaiblissement sur le trajet en liaison descendante, ou d'être l'une d'un nombre donné de stations de base dans l'ensemble actif ayant l'affaiblissement sur le trajet le plus bas.

4. Procédé selon l'une quelconque des revendications précédentes, dans lequel lorsque le sous-ensemble comprend une station de base unique, le procédé comprend en outre d'optimiser les algorithmes de programmation du terminal mobile dans la station de base en conséquence.

5. Procédé selon l'une quelconque des revendications précédentes, dans lequel la signalisation des occupants du sous-ensemble se fait au moyen d'identifiants de noeuds B ajoutés à un en-tête de contrôle d'accès au support (MAC) de chaque bloc de transport du canal E-DCH.

6. Procédé selon l'une quelconque des revendications précédentes, dans lequel la signalisation des mesures à utiliser pour l'évaluation de savoir s'il faut programmer le terminal mobile est ajoutée à un en-tête MAC de chaque bloc de transport du canal E-DCH envoyé au noeud B.

7. Procédé selon l'une quelconque des revendications 1 à 5, dans lequel la signalisation des mesures à utiliser pour l'évaluation de savoir s'il faut programmer le terminal mobile est envoyée par une signalisation de contrôle de ressources radio (RRC) au réseau UTRAN.
